Europäisches Patentamt

European Patent Office

Office européen des brevets

(11) Veröffentlichungsnummer: **0 218 915**
**B1**

(12) **EUROPÄISCHE PATENTSCHRIFT**

(45) Veröffentlichungstag der Patentschrift:
07.02.90

(51) Int. Cl.⁴: **F16C 35/06**, F16C 25/08, H02K 29/08

(21) Anmeldenummer: 86112504.5

(22) Anmeldetag: 10.09.86

(54) **Lagerflansch, insbesondere für einen einseitig und axial verspannt gelagerten Aussenläufermotor.**

(30) Priorität: 23.09.85 DE 3533898

(43) Veröffentlichungstag der Anmeldung:
22.04.87 Patentblatt 87/17

(45) Bekanntmachung des Hinweises auf die Patenterteilung:
07.02.90 Patentblatt 90/6

(84) Benannte Vertragsstaaten:
AT DE FR GB IT NL

(56) Entgegenhaltungen:
EP-A- 0 149 228
DE-A- 2 629 427
DE-A- 2 718 428
DE-A- 2 749 729
DE-A- 3 101 596
DE-A- 3 327 123
FR-A- 2 209 423
FR-A- 2 507 714
US-A- 1 332 444
US-A- 3 516 717
US-A- 4 435 673
US-A- 4 540 906

(73) Patentinhaber: Siemens Aktiengesellschaft,
Wittelsbacherplatz 2, D-8000 München 2(DE)

(72) Erfinder: Schmidt, Helmut, Unterer Weinberg 44,
D-8701 Reichenberg(DE)
Erfinder: Hähnel, Peter, Brahmsstrasse 27,
D-8508 Wendelstein(DE)

## Beschreibung

Die Erfindung bezieht sich auf einen Lagerflansch gemäß Oberbegriff des Anspruchs 1; ein derartiger Lagerflansch ist durch eine offenkundige Vorbenutzung bekannt.

Bei dem bekannten, für einen Plattenspeicherantrieb vorgesehenen Außenläufermotor sind die beiden Kugellager getrennt je für sich genau lagejustiert in die Lagerbohrung mit einem solchen Zwischenabstand zwischen den beiden, im Preßsitz zur Rotorwelle gehaltenen Innenringen nacheinander eingedrückt, daß zwischen den gegenseitig axial zu verspannenden Außenringen ein hinreichend großer Abstand verbleibt, um für zwei zur Verspannung vorgesehene Tellerfedern und eine axial zwischen den Tellerfedern gemäß DIN-Norm 2093 zur Abstützung notwendige Zwischenscheibe einerseits genügend Platz schaffen und andererseits betriebsmäßig die notwendige axiale Verspannung gewährleisten zu können.

Gemäß Aufgabe vorliegender Erfindung soll bei Beibehaltung der für einen geringen Radialschlag vorteilhaften Aufteilung der Lagerbelastung auf zwei hintereinander in der Lagerbohrung angeordnete Kugellager der Montageaufwand vermindert werden.

Die Lösung dieser Aufgabe gelingt bei einem Lagerflansch der eingangs genannten Art erfindungsgemäß durch die Lehre des Anspruchs 1 bzw. des Anspruchs 2; vorteilhafte Ausgestaltungen der Erfindung sind jeweils Gegenstand der Unteransprüche. Bei dem erfindungsgemäßen Lagerflansch mit zumindest zwei in seiner Lagerbohrung axial hintereinander angeordneten Kugellagern kann in einer insbesondere für eine Automatenfertigung vorteilhaften Weise der Montage- und damit der notwendige Maschinenaufwand dadurch vermindert werden, daß in einem einzigen Arbeitsgang beide Kugellager mit der einzigen zwischengelegten Federscheibe eingedrückt werden können. Als Federscheiben sind dabei kreisringförmige über ihren Umfang gewellte Federelemente der Art zu verstehen wie sie z.B. in der deutschen DIN-Norm 0 042 013 beschrieben werden. Gesonderte getrennte Einjustierungsmaßnahmen für jeden einzelnen Kugellagerring zur Sicherung des notwendigen axialen Zwischenraumes für die Unterbringung zweier Tellerfedern und einer Zwischenlegscheibe erübrigen sich somit; gleichzeitig kann durch den Fortfall mehrere Elemente zur Sicherung der notwendigen Axialvorspannung und die unmittelbare axiale Anlage der beiden Kugellagern die axiale Baugröße des Antriebs wesentlich vermindert wird, so daß z.B. für eine von der Rotorwelle angetriebene, den Lagerflansch axial umgreifende Plattenspindel eines Plattenspeichers ein größerer Nutzraum zur Verfügung steht.

Die Montage, insbesondere hinsichtlich der Festlegung der beiden gemeinsam eingeschobenen Kugellager, kann dadurch noch weiter vereinfacht werden, daß nach einer Ausgestaltung der Erfindung auf der offenen Stirnseite das der Lagerbohrung nächstliegende Kugellager als Festlager mit einem Preßsitz sowohl zwischen dessen Innenring zur Rotorwelle als auch zwischen dessen Außenring zur Lagerbohrung und jeweils nur der gegen die Wellfederscheibe anliegende Außenring oder Innenring des weiteren Kugellagers als Schiebesitz zur Lagerbohrung bzw. zur Rotorwelle ausgebildet sind.

Die Erfindung sowie weitere vorteilhafte Ausgestaltungen der Erfindung werden im folgenden anhand eines schematisch dargestellten Ausführungsbeispiels in der Zeichnung näher erläutert; darin zeigen:

Fig. 1 einen axialen Längsschnitt durch einen zum Antrieb einer Plattenspindel eines Plattenspeicherantriebs vorgesehenen Außenläufermotor;

Fig. 2 eine vergrößerte Detaildarstellung aus Fig.1 im Bereich der in den Lagerflansch eingedrückten beiden Kugellager;

Fig. 3 eine außen am Lagerflansch angreifende, den Lagerflansch vor übermäßiger Belastung beim Eindrücken der Kugellager entlastende Abstützvorrichtung.

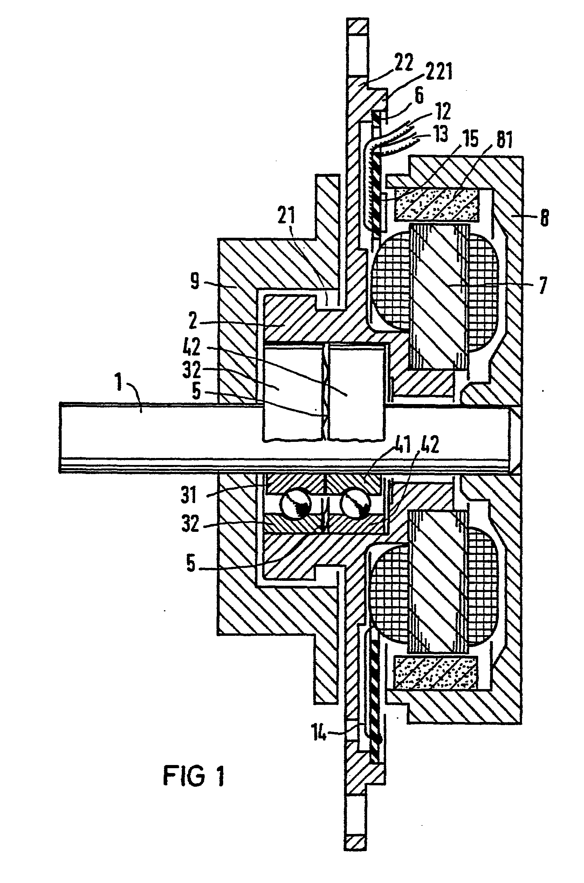

Fig.1 zeigt in einem axialen Längsschnitt einen Außenläufermotor, der eine Plattenspindel 9 eines Plattenspeichers antreibt und über einen an seinem Lagerflansch 2 angeformten Befestigungsflansch 22 in einem Datenverarbeitungsgerät einbaubar ist; der Lagerflansch 2 dient dabei mittel- bzw. unmittelbar als tragendes Bauteil für sämtliche in den Zeichnungen dargestellten Bauteile.

Auf das rechte Ende des Lagerflansches 2 ist zunächst ein bewickeltes Statorblechpaket 7 aufgedrückt. Im linken, axial vor dem bewickelten Statorblechpaket 7 liegenden Teil des Lagerflansches 2 ist eine Lagerbohrung eingelassen, in die zwei Kugellager 3,4 unter Zwischenlage einer Federscheibe 5 von der linken offenen Stirnseite der Lagerbohrung her eingeschoben sind. In den Kugellagern 3,4 ist eine Rotorwelle 1 gelagert, auf deren linkes Ende die Plattenspindel 9 und auf deren rechtes Ende eine Läuferglocke 8 des Außenläufermotors aufgedrückt ist, an deren radial äußeren Enden Magnetschalen 81 zur Bildung des Erregerfeldes des Außenläufermotors gehaltert sind.

An der dem bewickelten Stator zugewandten Stirnseite des Befestigungsflansches 22 ist innerhalb eines axial vorstehenden Randes 221 eine Leiterplatte 6 gehaltert, auf der u.a. den betriebsmäßig rotierenden Dauermagnetschalen 81 zugeordnete und daher stirnseitig benachbart angeordnete Hallwandler 15 gehaltert sind. An die Leiterbahnen der an ihrer Vorder- und ihrer Rückseite kaschierten Leiterplatten 6 sind außerdem Versorgungs- und Signalspannungsleitungen 12 sowie äußere Wicklungsspeiseleitungen 13 für die Spulenwicklungsenden 14 der im Statorblechpaket 7 eingebrachten Statorwicklung kontaktiert.

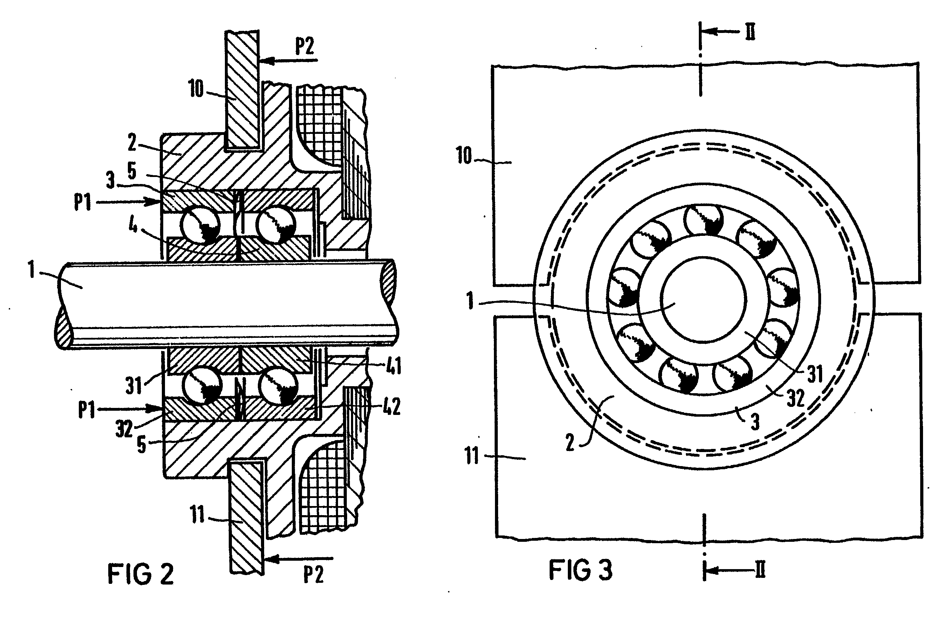

Die erfindungsgemäße Lagerung der Rotorwelle 1 über die beiden axial hintereinander angeordneten Kugellager 3,4 in einer zu dem einen Ende des Lagerflansches 2 stirnseitig offenen Lagerbohrung wird im folgenden anhand von Fig.2 näher beschrieben.

Die beiden Kugellager 3,4 liegen mit ihren Innenringen 31,41 axial unmittelbar aneinander. Die Außenringe 32,42 werden durch eine stirnseitig anliegende zwischengelegte Federscheibe 5 axial derart vorgespannt, daß sich die aus Fig.2 ersichtliche Verteilung des jeweiligen Spiels zwischen Außenring und Kugelring bzw. Innenring ergibt, wobei zweckmäßigerweise das der offenen Stirnseite der Lagerbohrung nächstliegende Kugellager 3 als Festlager mit einem Preßsitz sowohl zwischen dessen Innenring 31 zur Rotorwelle 1 als auch zwischen dessen Außenring 32 zur Lagerbohrung und jeweils nur der gegen die Federscheibe 5 anliegende Außenring 42 des zweiten Kugellagers 4 als Schiebesitz zur Lagerbohrung ausgebildet ist; der Innenring des zweiten Kugellagers 4 ist ebenfalls als Preßsitz auf der Rotorwelle 1 gehalten.

Durch die erfindungsgemäße Anordnung können also die beiden Kugellager 3,4 auf kürzester axialer Länge in die Lagerbohrung des Lagerflansches 2 in einem Arbeitsgang eingedrückt und im Vergleich zur bekannten Anordnungen auf ein weiteres Federelement und eine Zwischenlegscheibe verzichtet werden. Das bei üblichen Kugellagern vorhandene Spiel erlaubt,daß einerseits bei unmittelbar axial aneinanderliegenden Innenringen beim Aufdrücken der beiden Kugellager in die Lagerbohrung einerseits die Federscheibe nicht durch zu starke Pressung beschädigt wird und andererseits die Federkraft der Federscheibe ausreicht, um betriebsmäßig die Außenringe hinreichend axial gegeneinander verspannen zu können.

Um einerseits vor dem Einbringen der Kugellager 3,4 bereits den Lagerflansch 2 an seinem rechten Ende mit dem bewickelten Statorblechpaket 7 bestücken und die Statorwicklung an die in den Befestigungsflansch gehaltene Leiterplatte voll anschließen zu können und andererseits den Lagerflansch beschädigungsfrei, insbesondere im Bereich seines dünnwandigen Übergangs von der Lagerbohrung zum Statoraufnahmeteil bei dem Eindrücken der beiden, auf der Rotorwelle 1 hintereinander fixierten Kugellager 3,4, abstützen zu können, ist in vorteilhafter Weise am Außenumfang des Lagerflansches 2 eine Ausnehmung für eine Abstützung gegenüber der axialen Druckkraft, mit der die Kugellager in den Lagerflansch 2 eingedrückt werden,vorgesehen, wobei zweckmäßigerweise die Ausnehmung im Lagerflanschbereich zwischen der stirnseitigen Öffnung an dem einen Ende der Lagerbohrung und dem angeformten Befestigungsflansch 22 angeordnet und als umlaufende Nut 21 in die Umfangsfläche des Lagerflansches 2 eingeformt ist. In die umlaufende Nut 21 sind zwei Halbscheiben 10,11 radial einsteckbar, die die Reaktionskräfte P2 zu den Druckkräften P1 aufnehmen können, mit denen die Kugellager 3,4 über den Außenring 32 in die Lagerbohrung des Lagerflansches 2 eingedrückt werden.

Es ist ersichtlich, daß durch die erfindungsgemäße Abstützvorrichtung einerseits die Reaktionskräfte in einem dickwandigen Teil des Lagerflansches aufgenommen und somit zu starke Biegebeanspruchungen von verformungsgefährdeten Teilen des Lagerflansches ferngehalten werden und daß andererseits der rechts von der Abstützvorrichtung liegende Teil des Lagerflansches unbehindert für eine Vormontage des Stators bzw. einer Leiterplatte zur Verfügung steht, da von dieser Seite eine axiale Abstützung gegenüber der Druckkraft für die Kugellager nicht angesetzt werden braucht.

## Patentansprüche

1. Lagerflansch (2) mit zumindest zwei in einer Lagerbohrung axial hintereinander angeordneten Kugellagern (3, 4) zur Lagerung einer Rotorwelle (1), insbesondere für einen einseitig und axial verspannt gelagerten Außenläufermotor, die von der offenen Stirnseite an dem einen Ende der Lagerbohrung her in diese eingeschoben und deren Außenringe (32, 42) mittels einer zwischenliegenden Federanordnung (5) axial gegeneinander verspannt sind, **dadurch gekennzeichnet**, daß die Innenringe (31,41) der beiden Kugellager (3;4) unmittelbar axial voreinanderliegend im Festsitz zur Rotorwelle (1) in die Lagerbohrung montiert, die Außenringe (32; 42) der beiden Kugellager (3,4) durch eine zwischengelegte Federscheibe (5) gegenseitig axial verspannt sind, sowie einer der beiden Außenringe (32, 42) als Preßsitz und einer als Schiebesitz zur Lagerbohrung ausgebildet ist.

2. Lagerflansch (2) mit zumindest zwei in einer Lagerbohrung axial hintereinander angeordneten Kugellagern (3, 4) zur Lagerung einer Rotorwelle (1), insbesondere für einen einseitig und axial verspannt gelagerten Außenläufermotor, die von der offenen Stirnseite an dem einen Ende der Lagerbohrung her in diese eingeschoben und deren Innenringe (31, 41) mittels einer zwischenliegenden Federanordnung (5) axial gegeneinander verspannt sind, **dadurch gekennzeichnet**, daß die Außenringe (32; 42) der beiden Kugellager (3,4) unmittelbar axial voreinanderliegend im Festsitz zur Lagerbohrung in die Lagerbohrung montiert, die Innenringe (31,41) der beiden Kugellager (3,4) durch eine zwischengelegte Federscheibe (5) gegenseitig axial verspannt sind sowie einer der beiden Innenringe (31, 41) als Preßsitz und einer als Schiebesitz zur Rotorwelle (1) ausgebildet ist.

3. Lagerflansch nach Anspruch 1 oder 2, **dadurch gekennzeichnet**, daß das der offenen Stirnseite der Lagerbohrung nächstliegende Kugellager (3) als Festlager mit einem Preßsitz sowohl zwischen dessen Innenring (31) zur Rotorwelle (1) als auch zwischen dessen Außenring (32) zur Lagerbohrung ausgebildet ist.

4. Lagerflansch nach zumindest einem der Ansprüche 1-3, **dadurch gekennzeichnet**, daß an dem Lagerflansch (2) im Bereich des anderen Endes der Lagerbohrung der Stator (7) eines Elektro-Außenläufermotors gehalten ist.

5. Lagerflansch nach zumindest einem der Ansprüche 1-4, **dadurch gekennzeichnet**, daß an dem Lagerflansch (2) im Bereich des anderen Endes der Lagerbohrung axial vor dem Stator (7) ein radial dessen Außenumfang überragender Befestigungsflansch angeformt ist.

6. Lagerflansch nach Anspruch 5, **dadurch gekennzeichnet**, daß an der dem Stator (7) zugewandten Stirnseite des Befestigungsflansches (22) eine Leiterplatte (6) gehaltert ist.

7. Lagerflansch nach zumindest einem der Ansprüche 1-6, **dadurch gekennzeichnet**, daß am Außenumfang des Lagerflansches (2) eine Ausnehmung zum formschlüssigen Eingriff einer den Lagerflansch (2) bei der Montage der Kugellager (2;3) entlastenden Abstützvorrichtung (Halbscheiben 10;11) vorgesehen ist.

8. Lagerflansch nach Anspruch 7, **dadurch gekennzeichnet**, daß als Ausnehmung eine umlaufende Nut (21) im Lagerflanschbereich zwischen der stirnseitigen Öffnung an dem einen Ende der Lagerbohrung und dem angeformten Befestigungsflansch (22) vorgesehen ist.

## Claims

1. Bearing flange (2) with at least two ball bearings (3, 4), arranged axially behind one another in a bearing well, for supporting a rotor shaft (1), more particularly for an external-rotor motor, unilaterally mounted and axially biased, which ball bearings are inserted into the bearing well from the open face at one end of the well and the outer rings (32, 42) of which are axially braced against one another by means of a spring arrangement (5) between them, characterized in that the inner rings (31, 41) of the two ball bearings (3; 4) are mounted in the bearing well directly axially in front of one another with an interference fit on the rotor shaft (1), the outer rings (32; 42) of the two ball bearings (3, 4) are mutually axially braced by means of a spring plate (5) between them, and one of the two outer rings (32, 42) is constructed to have a press fit and one to have a sliding fit in the bearing well.

2. Bearing flange (2) with at least two ball bearings (3, 4), arranged axially behind one another in a bearing well, for supporting a rotor shaft (1), more particularly for an external-rotor motor, unilaterally mounted and axially biased, which ball bearings are inserted into the bearing well from the open face at one end of the well and the inner rings (31, 41) of which are axially braced against one another by means of a spring arrangement (5) between them, characterized in that the outer rings (32; 42) of the two ball bearings (3, 4) are mounted in the bearing well directly axially in front of one another with an interference fit in the bearing well, the inner rings (31, 41) of the two ball bearings (3, 4) are mutually axially braced by means of a spring plate (5) between them, and one of the two inner rings (31, 41) is constructed to have a press fit and one to have a sliding fit on the rotor shaft (1).

3. Bearing flange according to claim 1 or 2, characterized in that the ball bearing (3) lying next to the open end of the bearing well is constructed as fixed bearing with a press fit both between its inner ring (31) and the rotor shaft (1) and between its outer ring (32) and the bearing well.

4. Bearing flange according to at least one of claims 1-3, characterized in that the stator (7) of an electrical external-rotor motor is supported on the bearing flange (2) in the region of the other end of the bearing well.

5. Bearing flange according to at least one of claims 1-4, characterized in that on the bearing flange (2) in the region of the other end of the bearing well axially in front of the stator (7) a securing flange is integrally moulded projecting radially beyond the outer circumference of the stator.

6. Bearing flange according to claim 5, characterized in that on the face of the securing flange (22), facing the stator (7), a printed-circuit board (6) is supported.

7. Bearing flange according to at least one of claims 1-6, characterized in that on the outer circumference of the bearing flange (2) a recess is provided for the form-locking engagement of a supporting device (half discs 10; 11) relieving the bearing flange (2) of load when the ball bearings (2; 3) are assembled.

8. Bearing flange according to claim 7, characterized in that as recess there is provided a circumferential groove (21) in the region of the bearing flange between the face opening at the one end of the bearing well and the integrally moulded securing flange (22).

## Revendications

1. Flasque de palier (2) comportant au moins deux roulements à billes (3, 4) disposés axialement l'un derrière l'autre dans un alésage de palier et servant à supporter un arbre (1) d'un rotor, notamment pour un moteur à induit extérieur, supporté unilatéralement et serré axialement, les roulements à billes étant insérés à force à partir de la face frontale ouverte, dans une extrémité de l'alésage de palier, tandis que leurs bagues extérieures (32, 42) sont serrées axialement l'une contre l'autre au moyen d'un dispositif élastique intercalé (5), caractérisé par le fait que les bagues intérieures (31, 41) des deux roulements à billes (3; 4) sont montés directement, en étant disposés côte-à-côte axialement, selon un ajustement serré sur l'arbre (1) du rotor, dans l'alésage de palier, et que les bagues extérieures (32; 42) des deux roulements à billes (3, 4) sont serrées axialement l'une contre l'autre moyennant l'interposition d'une rondelle élastique (5), et que l'une des deux bagues extérieures (32; 42) est montée selon un ajustement serré par rapport à l'alésage de palier, tandis que l'autre est montée selon un ajustement appuyé dans l'alésage de palier.

2. Flasque de palier (2) comportant au moins deux roulements à billes (3, 4) disposés axialement l'un derrière l'autre dans un alésage de palier et servant à supporter un arbre (1) de rotor, notamment pour un moteur à induit extérieur, supporté unilatéralement et serré axialement, les roulements à billes étant insérés à force à partir de la face frontale ouverte, dans une extrémité de l'alésage de palier, tandis que leurs bagues intérieures (31, 41) sont serrées axialement l'une contre l'autre au moyen d'un dispositif élastique intercalé (5), caractérisé par le fait que les bagues extérieures (32; 42) des deux roulements à billes (3; 4) sont montés directement, en étant disposés côte-à-côte axialement, selon un ajustement serré sur l'arbre (1) du rotor, dans l'alésage de palier, et que les bagues intérieures (31, 41) des deux roulements à billes (3, 4) sont serrées axialement l'une contre l'autre moyennant l'interposition d'une rondelle élastique (5), et que l'une des deux bagues intérieures (31, 41) est montée selon un ajustement serré sur l'arbre (1) du rotor, tandis que l'autre est montée selon un ajustement appuyé sur l'arbre.

3. Flasque de palier suivant la revendication 1 ou 2, caractérisé par le fait que le roulement à billes (3), qui est le plus proche de la face frontale ouverte de l'alésage de palier, est réalisé sous la forme d'un palier fixe, avec un ajustement serré aussi bien entre sa bague intérieure (31) et l'arbre (1) du rotor qu'entre sa bague extérieure (32) et l'alésage de palier.

4. Flasque de palier suivant au moins une des revendications 1–3, caractérisé par le fait que le stator (7) d'un moteur électrique à induit extérieur est maintenu dans le flasque de palier (2) au niveau de l'autre extrémité de l'alésage de palier.

5. Flasque de palier suivant au moins l'une des revendications 1–4, caractérisé par le fait que sur le flasque de palier (2) se trouve formée par façonnage, au niveau de l'autre extrémité de l'alésage de palier et axialement en avant du stator (7), une bride de fixation qui fait saillie radialement sur le pourtour extérieur du stator.

6. Flasque de palier suivant la revendication 5, caractérisé par le fait qu'une plaquette à circuits imprimés (6) est fixée sur la face frontale, tournée vers le stator (7), de la bride de fixation (22).

7. Flasque de palier suivant au moins l'une des revendications 1–6, caractérisé par le fait que dans le pourtour extérieur du flasque de palier (2) il est prévu un évidement permettant une interpénétration, selon une liaison par formes complémentaires, d'un dispositif de support (demi-rondelles 10; 11), qui chargent le flasque de palier (2) lors du montage des roulements à billes (2; 3).

8. Flasque de palier suivant la revendication 7, caractérisé par le fait qu'il est prévu, comme évidement, une gorge circonférentielle (21) ménagée dans la zone du flasque de palier entre l'ouverture frontale située sur une extrémité de l'alésage de palier et la bride de fixation (22) formée par façonnage.

FIG 1

FIG 3

FIG 2